# EUROPEAN PATENT SPECIFICATION

(11) **EP 4 318 690 B1**
(45) Date of publication and mention of the grant of the patent: **20.05.2026**
(21) Application number: 22825223.5
(22) Date of filing: 09.06.2022
(51) Int. Cl.: H01M 8/04119, B01D 63/02, H01M 8/10

(54) **FUEL CELL MEMBRANE HUMIDIFIER**
BEFEUCHTER FÜR BRENNSTOFFZELLENMEMBRAN
HUMIDIFICATEUR À MEMBRANE DE PILE À COMBUSTIBLE

(30) Priority: 16.06.2021 KR 20210078241
(43) Date of publication of application: 07.02.2024
(73) Proprietor: Kolon Industries, Inc., Seoul 07793 (KR)
(72) Inventor: KIM, Do Woo, Seoul 07793 (KR); KIM, Kyoung Ju, Seoul 07793 (KR); AHN, Na Hyun, Seoul 07793 (KR); KIM, In Ho, Seoul 07793 (KR)
(74) Representative: Vossius & Partner Patentanwälte Rechtsanwälte mbB
(86) International application number: PCT/KR2022/008167
(87) International publication number: WO 2022/265298

(56) References cited:
- WO-A1-2022/265295
- JP-A- 2014 117 651
- KR-A- 20180 119 828
- KR-A- 20190 138 528
- KR-A- 20210 067 366
- KR-A- 20210 067 366
- KR-A- 20210 069 614
- KR-B1- 102 264 517
- US-A1- 2021 151 780

## Description

### Technical Field

The present invention relates to a fuel cell membrane humidifier, and more specifically, to a fuel cell membrane humidifier capable of sealing a gap between an inner case and a middle case which form a cartridge, thereby preventing the bypass of exhaust gases .

### Background Art

A fuel cell is a power-generating battery that produces electricity by a combination of hydrogen with oxygen. Unlike general chemical cells such as batteries or storage batteries, fuel cells can continuously produce electricity as long as hydrogen and oxygen are supplied thereto, and are about twice as efficient as internal combustion engines since there is no heat loss.

In addition, because the chemical energy generated by the combination of hydrogen with oxygen is directly converted into electrical energy, pollutant emissions are low. Therefore, fuel cells are not only environmentally friendly, but also have the advantage of reducing concerns about resource depletion due to increased energy consumption.

Fuel cells may be broadly classified into polymer electrolyte membrane fuel cells (PEMFCs), phosphoric acid fuel cells (PAFCs), molten carbonate fuel cells (MCFCs), solid oxide fuel cells (SOFCs), alkaline fuel cells (AFCs), and the like, depending on the type of electrolyte used.

These fuel cells operate fundamentally on the same principle, but are different from each other in the type of fuel used, operating temperature, catalyst, electrolyte, and the like. Among these, the PEMFC is known to be the most promising not only for small stationary power generation equipment but also for transportation systems because the PEMFC can operate at lower temperatures than other fuel cells and can be miniaturized due to its high-power density.

One of the most important factors in improving the performance of the PEMFC is to maintain the moisture content by supplying a certain amount of moisture to the polymer electrolyte membrane or proton exchange membrane (PEM) of the membrane electrode assembly. This is because when the polymer electrolyte membrane dries, power generation efficiency rapidly decreases.

Methods for humidifying a polymer electrolyte membrane include 1) a bubbler humidification method to supply moisture by filling a pressure vessel with water and passing target gas through a diffuser, 2) a direct injection method to supply moisture directly to a gas flow pipe through a solenoid valve after calculating the amount of moisture needed for the fuel cell reaction, and 3) a membrane humidification method to supply moisture to the fluidized layer of gas using a polymer separation membrane.

Among these, the membrane humidification method whereby the polymer electrolyte membrane is humidified by providing water vapor to air supplied to the polymer electrolyte membrane by using a membrane that selectively transmits only the water vapor contained in exhaust gas is advantageous in that it can lighten and miniaturize the membrane humidifier.

When forming a module, a hollow fiber membrane with a large permeable area per unit volume is preferable as the selectively permeable membrane used in the membrane humidification method. That is, when manufacturing a membrane humidifier using a hollow fiber membrane, high integration of the hollow fiber membrane with a wide contact surface area is possible, enabling sufficient humidification of a fuel cell even with a small capacity, low-cost materials may be used, and moisture and heat contained in off-gas discharged at high temperature from the fuel cell may be recovered and reused by the membrane humidifier.

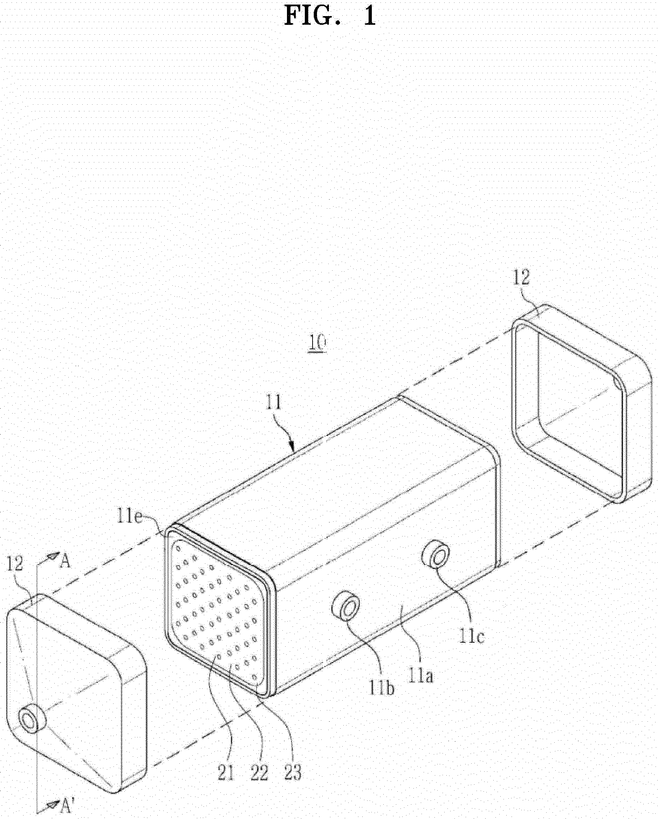

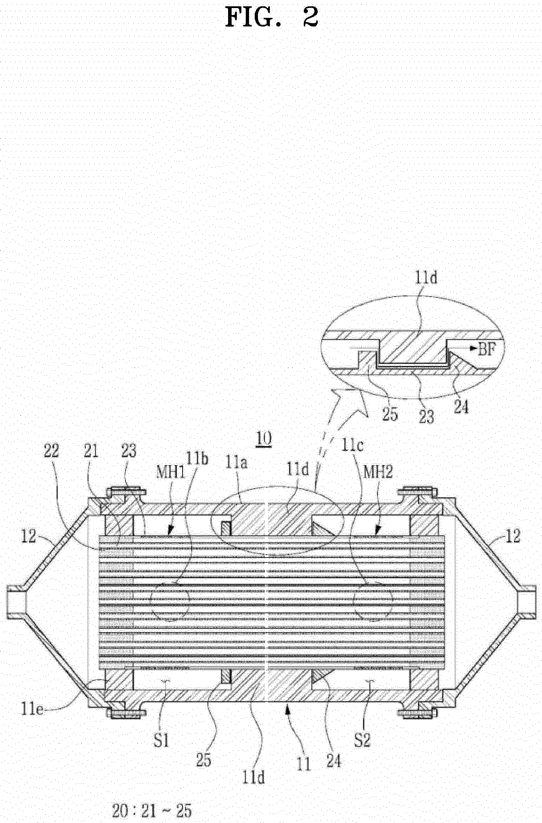

FIG. 1 is an exploded perspective view of a fuel cell membrane humidifier according to the prior art, and FIG. 2 is a cross-sectional view illustrating problems of the fuel cell membrane humidifier according to the prior art.

Referring to FIGS. 1 and 2, a fuel cell membrane humidifier 10 of the prior art includes a humidification module 11 in which moisture exchange occurs between air supplied from the outside and off-gas discharged from a fuel cell stack (not shown) and caps 12 coupled to both ends of the humidification module 11.

One of the caps 12 supplies air supplied from the outside to the humidification module 11, and the other supplies air humidified by the humidification module 11 to the fuel cell stack.

The humidification module 11 includes a mid-case 11a having an off-gas inlet 11b and an off-gas outlet 11c and at least one cartridge 20 positioned in the mid-case 11a. In the drawing, one cartridge is illustrated. The cartridge 20 has an inner case 23, and a plurality of hollow fiber membranes 21 and potting portions 22 for fixing both ends of the bundle of the hollow fiber membranes 21 are formed inside the inner case 23. The potting portions 22 are generally formed by curing a liquid polymer such as liquid polyurethane resin through a casting method.

A resin layer 11e is formed between the cartridge 20 and the mid-case 11a, and the resin layer 11e fixes the cartridge 20 to the mid-case 11a and blocks inner spaces of the caps 12 and an inner space of the mid-case 11a.

The inner space of the mid-case 11a is divided into a first space S1 and a second space S2 by a partition 11d. The inner case 23 has a first mesh hole portion MH1 arranged in a mesh shape for fluid communication with the first space S1 and a second mesh hole portion MH2 arranged in a mesh shape for fluid communication with the second space S2.

The off-gas flowing into the first space S1 of the mid-case 11a through the off-gas inlet 11b flows into the inner case 23 through the first mesh hole portion MH1 and contacts the outer surfaces of the hollow fiber membranes 21. Subsequently, the moisture-deprived off-gas escapes into the second space S2 through the second mesh hole portion MH2 and is then discharged from the mid-case 11a through the off-gas outlet 11c. The cartridge 20 including the inner case 23 has the advantages of easy assembly into the mid-case 11a and easy replacement.

Referring to FIG. 2, the inner case 23 includes a rib 25 in contact with one surface of the partition 11d and a hook 24 in contact with the other surface of the partition 11d. The hook 24 has an inclined surface. With the caps 12 and the mid-case 11a separated, when the cartridge 20 is inserted into the mid-case 11a from left to right in the drawing, the inclined surface of the hook 24 may be inserted between the partition 11d in an interference fit method while contacting the partition 11d, and then the cartridge 20 is continuously inserted until the rib 25 contacts the partition 11d.

That is, the hook 24 and the rib 25 of the cartridge 20 are fixed to one side and the other side of the partition 11d, respectively, with the partition 11d therebetween, and thus the cartridge 20 is fixed within the mid-case 11a.

The gap between the hook 24 and the rib 25 and the width of the partition 11d should be manufactured to be substantially the same. Otherwise, the off-gas flowing in through the off-gas inlet 11b is discharged to the off-gas outlet 11c through the gap between the rib 25 and the partition 11d, and the gap between the hook 24 and the partition 11d. In other words, the off-gas to be used for humidification is bypassed and discharged to the outside without humidification, (see "BF" in FIG. 2)

However, the gap between the hook 24 and the rib 25 and the width of the partition 11d may vary due to incorrect assembly or dimensional tolerance, causing the bypass of off-gas and the reduction of humidification efficiency. KR 2021 0067366 A relates to a humidifier for a fuel cell for supplying humidified air to the fuel cell. US 2021/151780 A1 relates to a fuel cell membrane humidifier comprising a middle case having a module insertion unit therein, a cap case coupled to the middle case, a hollow fiber membrane module inserted into the module insertion unit, and a pressure buffer unit disposed between an inner wall of the middle case and the module insertion unit. KR 102 264 517 B1 relates to a method for manufacturing a hollow fiber membrane module using an open type hollow fiber membrane cartridge.

### Disclosure

### Technical Problem

The purpose of the present invention is to provide a fuel cell membrane humidifier capable of preventing the bypassing of off-gas by sealing the gap between an inner case and a mid-case which form the cartridge.

### Technical Solution

The invention is specified by the independent claim. Preferred embodiments are defined in the dependent claims. In the following description, although numerous features may be designated as optional, it is nevertheless acknowledged that all features comprised in the independent claim are not to be read as optional.

### Advantageous Effects

According to an embodiment of the present invention, it is possible to prevent the bypass of off-gas by sealing the gap between an inner case and a mid-case which form a cartridge.

### Description of Drawings

FIG. 1 is an exploded perspective view of a fuel cell membrane humidifier according to the prior art.
FIG. 2 is a cross-sectional view illustrating the problems of the fuel cell membrane humidifier according to the prior art.
FIG. 3 is a cross-sectional view of a fuel cell membrane humidifier according to an embodiment of the present invention.
FIG. 4 is a cross-sectional view of a gasket according to an embodiment of the present invention.
FIG. 5 is a cross-sectional view of a fuel cell membrane humidifier having a different form of a partition, according to an embodiment of the present invention.

### Best Mode

### Mode for Invention

Since the present invention is subjected to various modifications and has various embodiments, specific embodiments are illustrated and described in detail in the description. However, this is not intended to limit the present invention to specific embodiments.

The terms used in the present invention are used only to describe specific embodiments and are not intended to limit the present invention. Singular expressions include plural expressions unless clearly indicated otherwise in context. In the present invention, terms such as "include" or "have" are intended to designate the presence of features, numbers, steps, operations, components, parts, or combinations thereof described in the specification, but are not intended to preclude the possibility of presence or addition of one or more other features, numbers, steps, operations, components, parts, or combinations thereof. Hereinafter, the fuel cell membrane humidifier according to an embodiment of the present invention is described with reference to the drawings.

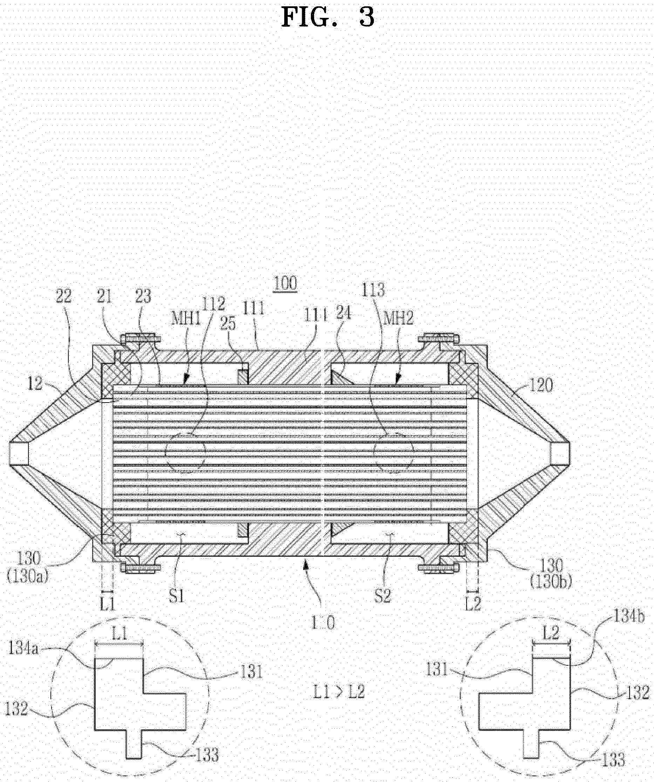

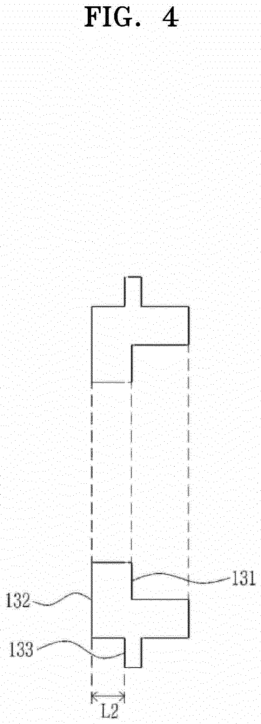

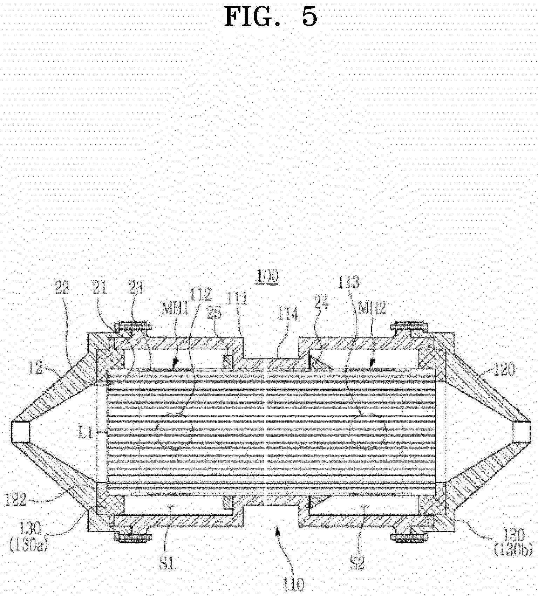

FIG. 3 is a cross-sectional view of a fuel cell membrane humidifier according to an embodiment of the present invention, FIG. 4 is a cross-sectional view of a gasket according to an embodiment of the present invention, and FIG. 5 is a cross-sectional view of a fuel cell membrane humidifier having a different form of a partition, according to an embodiment of the present invention.

As shown in FIG. 3, a fuel cell membrane humidifier 100 according to an embodiment of the present invention includes a humidification module 110, caps 120, and gaskets 130.

The humidification module 110 performs moisture exchange between air supplied from the outside and off-gas discharged from a fuel cell stack (not shown). The caps 120 are fastened to both ends of the humidification module 110. One of the caps 120 supplies air supplied from the outside to the humidification module 110, and the other supplies air humidified by the humidification module 110 to the fuel cell stack.

The humidification module 110 includes a mid-case 111 having an off-gas inlet 112 and an off-gas outlet 113, and at least one cartridge 20 positioned within the mid-case 111.

Depending on the design, one of the caps 120 may supply off-gas to the humidification module 110 to flow inside the hollow fiber membranes, and the other may discharge the off-gas subjected to moisture exchange to the outside. In addition, the outside air may flow in through one of the off-gas inlet 112 and the off-gas outlet 113, and the air humidified by the humidification module 110 may be supplied to the fuel cell stack through the other thereof. The flow direction of the outside air may be the same as or the opposite to the flow direction of the off-gas.

The mid-case 111 and the cap 120 may each be independently formed of hard plastic or metal, and may have a cross-section of a circle or a polygon in the width direction. The circle includes an oval, and the polygon includes a polygon with rounded corners. For example, the hard plastic may be polycarbonate, polyamide (PA), polyphthalamide (PPA), polypropylene (PP), and the like. The inner space of the mid-case 111 may be divided into a first space S1 and a second space S2 by a partition 114.

The cartridge 20 includes a plurality of hollow fiber membranes 21, potting portions 22, an inner case 23, a hook 24, and a rib 25.

The hollow fiber membranes 21 may include a polymer membrane formed of polysulfone resin, polyethersulfone resin, sulfonated polysulfone resin, polyvinylidene fluoride (PVDF) resin, polyacrylonitrile (PAN) resin, polyimide resin, polyamidoimide resin, polyesterimide resin, or a mixture of at least two thereof.

The potting portions 22 fix ends of the hollow fiber membranes 21. The potting portions 22 may be formed by curing a liquid resin such as liquid polyurethane resin through a casting method such as deep potting, centrifugal potting, and the like.

The inner case 23 has an opening at each end and accommodates the plurality of hollow fiber membranes 21 therein. The potting portions 22, where the ends of the hollow fiber membranes 21 are potted, close the openings of the inner case 23. The inner case 23 has a first mesh hole portion MH1 arranged in a mesh shape for fluid communication with the first space S1 and a second mesh hole portion MH2 arranged in a mesh shape for fluid communication with the second space S2.

The off-gas flowing into the first space S1 of the mid-case 111 through the off-gas inlet 112 flows into the inner case 23 through the first mesh hole portion MH1 and contacts the outer surfaces of the hollow fiber membranes 21. Subsequently, the moisture-deprived off-gas escapes into the second space S2 through the second mesh hole portion MH2 and is then discharged from the mid-case 111 through the off-gas outlet 113.

The gaskets 130 are installed between the cap 120 and the cartridge 20. Specifically, the gaskets 130 are installed between the cap 120 and the inner case 23 which form the cartridge 20 by being pressed by the cap 120. A gasket 130a transmits the fastening force between the cap 120 and the mid-case 111 to the rib 25, so that the rib 25 seals the gap between the inner case 23 and the partition 114.

Likewise, a gasket 130b transmits the fastening force between the cap 120 and the mid-case 111 to the hook 24, so that the hook 24 seals the gap between the inner case 23 and the partition 114.

The following description focuses on the case of sealing by the rib 25, but does not exclude the case of sealing by the hook 24. Whether the hook 24 or the rib 25 seals the gap may be determined depending on the shape of the hook 24 or the rib 25. When the rib 25 has a closed curve shape surrounding the outer surface of the inner case 23, the rib 25 may seal the gap, and when the hook 24 has a closed curve shape surrounding the outer surface of the inner case 23, the hook 24 may seal the gap.

Each of the gaskets 130 has an inner case boundary surface 131, a cap boundary surface 132, and an insertion protrusion 133, and may be formed to have a single closed curve shape, as shown in FIG. 4.

The inner case boundary surface 131 which is a surface where the gasket 130 is in contact with the inner case 23 may have a single closed curve shape corresponding to the cross-section of the inner case 23. The cap boundary surface 132 which is a surface where the gasket 130 is in contact with the cap 120 may have a single closed curve shape corresponding to the cross-section of the cap 120. The insertion protrusion 133 is inserted between an end of the cap 120 and an end of the mid-case 111, and is pressed to seal the inner space of the cap 120 and the inner case of the mid-case 111 when fastening and assembling the cap 120 and the mid-case 111.

Since the gaskets 130 are made of rubber or plastic material with a certain hardness, the gaskets 130 are compressed by the pressure applied by the cap 120 and the mid-case 111 during the fastening of the cap 120 and the mid-case 111 once positioned between the cap 120 and the inner case 23, thereby transmitting the fastening force between the cap 120 and the mid-case 111 to the inner case 23 and the rib 25 protruding from a side of the inner case 23.

The fastening force (pressure or repulsion force due to compression) received by the gaskets 130 through the inner case 23 may be transmitted to the rib 25 so that the rib 25 applies force in the direction of the partition 114. Therefore, although there is a dimensional tolerance during manufacturing, the rib 25 may seal the gap between the inner case 23 and the partition 114. As a result, it is possible to prevent the bypassing of off-gas through the gap. The term "dimensional tolerance" may be used to include all cases in which the gap between the hook 24 and the rib 25 and the width of the partition 114 vary during the manufacturing process.

To more effectively transmit the fastening force, a bottom surface 122 of the cap 120 in contact with the cap boundary surface 132 may be formed to have a size corresponding to the cap boundary surface 132.

Even when the first gasket 130a on the rib 25 side and the second gasket 130b on the hook 24 side are formed with the same hardness and the same dimensions, the fastening force received by the gaskets 130 may be applied to the rib 25. However, since the second gasket 130b on the hook 24 side also transmits the fastening force to the hook 24, there is a risk that the fastening force on the rib 25 side may be offset by the fastening force on the hook 24 side.

Accordingly, in the present invention, the first gasket 130a on the rib 25 side and the second gasket 130b on the hook 24 side have different sizes. The size of the gaskets 130a and 130b refers to the size of gasket heads 134a and 134b, which is the gap between the cap 120 and the cartridge 20. (see L1 and L2 in FIG. 3)

Considering the membrane humidifier assembly sequence with reference to FIG. 3, first, the right cap 120 is fastened to the mid-case 111. The second gasket 130b is inserted into the right cap 120 and the mid-case 111. Subsequently, the cartridge 20 is inserted into the mid-case 111. The hook 24 with the inclined surface is inserted first and the rib 25 is inserted later. The hook 24 and the rib 25 are fixed to one side and the other side of the partition 114, respectively, with the partition 114 positioned therebetween. Next, after the first gasket 130a is positioned on the ends of the inner case 23 and the mid-case 111, the left cap 120 is fastened to the mid-case 111. The fastening force between the left cap 120 and the mid-case 111 is transmitted to the rib 25. In addition, the fastening force between the right cap 120 and the mid-case 111 is transmitted to the hook 24.

In this case, when the first gasket 130a on the rib 25 side and the second gasket 130b on the hook 24 side have different sizes, the fastening force (or the repulsion force by the gasket) on either side becomes more dominant, allowing one of the rib 25 and the hook 24 to seal the gap between the inner case 23 and the partition 114.

In addition, when the first gasket 130a and the second gasket 130b have different sizes, the sizes may be determined depending on the shape of the hook 24 or the rib 25.

When the rib 25 has a closed curve shape surrounding the outer surface of the inner case 23, the rib 25 may seal the gap between the inner case 23 and the partition 114, so it is preferable that the first gasket 130a on the rib 25 side is formed larger than the second gasket 130b on the hook 24 side.

Likewise, when the hook 24 has a closed curve shape surrounding the outer surface of the inner case 23, the hook 24 may seal the gap between the inner case 23 and the partition 114, so it is preferable that the second gasket 130b on the hook 24 side is formed larger than the first gasket 130a on the rib 25 side.

When both the hook 24 and the rib 25 have a closed curve shape surrounding the outer surface of the inner case 23, it is sufficient for the first gasket 130a and the second gasket 130b to be formed in different sizes.

Depending on the design, the partition 114 may be formed in a shape as shown in FIG. 5. Referring to FIG. 5, the partition 114 may be formed in a shape in which the central portion of the mid-case 111 is depressed inward.

### Reference Numerals

| | | | |
|---|---|---|---|
| 100 : | FUEL CELL MEMBRANE HUMIDIFIER | | |
| 110 : | HUMIDIFICATION MODULE | 111 : | MID-CASE |
| 112 : | OFF-GAS INLET | 113 : | OFF-GAS OUTLET |
| 114 : | PARTITION | 120 : | CAP |
| 130 : | GASKET | 20 : | CARTRIDGE |

## Claims

1. A fuel cell membrane humidifier (100) comprising:
a mid-case (111) having a partition (114) dividing an inner space;
a first cap fastened to one side of the mid-case (111);
a second cap fastened to another side of the mid-case (111);
an inner case (23) which is positioned in the mid-case (111) and accommodates a plurality of hollow fiber membranes (21);
a rib (25) which protrudes from one side of the inner case (23) and is in contact with one surface of the partition (114);
a hook (24) which protrudes from another side of the inner case (23) and is in contact with another surface of the partition (114);
a first gasket (130a) which is positioned between the first cap and the inner case (23) and transmits a fastening force between the first cap and the mid-case (111) to the rib (25); and
a second gasket (130b) which is positioned between the second cap and the inner case (23) and transmits the fastening force between the second cap and the mid-case (111) to the hook (24),
wherein a size of the first gasket (130a) is different from a size of the second gasket (130b).

2. The fuel cell membrane humidifier (100) of claim 1,
wherein, when the rib (25) has a closed curve shape surrounding the outer surface of the inner case (23) and the hook (24) does not have a closed curve shape,
a size of the first gasket (130a) is larger than a size of the second gasket (130b).

3. The fuel cell membrane humidifier (100) of claim 1,
wherein, when the hook (24) has a closed curve shape surrounding the outer surface of the inner case (23) and the rib (25) does not have a closed curve shape,
a size of the second gasket (130b) is larger than a size of the first gasket (130a).

## Patentansprüche

1. Brennstoffzellenmembran-Befeuchter, (100) aufweisend:
ein Mittelgehäuse (111) mit einer Trennwand (114), die einen Innenraum unterteilt;
eine erste Kappe, die auf einer Seite des Mittelgehäuses (111) befestigt ist;
eine zweite Kappe, die auf der anderen Seite des Mittelgehäuses (111) befestigt ist;
ein Innengehäuse (23), das in dem Mittelgehäuse (111) angeordnet ist und mehrere Hohlfasermembranen (21) aufnimmt;
eine Rippe (25), die aus einer Seite des Innengehäuses (23) vorsteht und mit einer Fläche der Trennwand (114) in Kontakt steht;
einen Haken (24), der von einer anderen Seite des Innengehäuses (23) vorsteht und mit einer anderen Fläche der Trennwand (114) in Kontakt steht;
eine erste Dichtung (130a), die zwischen der ersten Kappe und dem Innengehäuse (23) angeordnet ist und eine Befestigungskraft zwischen der ersten Kappe und dem Mittelgehäuse (111) auf die Rippe (25) überträgt; und
eine zweite Dichtung (130b), die zwischen der zweiten Kappe und dem Innengehäuse (23) angeordnet ist und die Befestigungskraft zwischen der zweiten Kappe und dem Mittelgehäuse (111) auf den Haken (24) überträgt,
wobei sich eine Größe der ersten Dichtung (130a) von einer Größe der zweiten Dichtung (130b) unterscheidet.

2. Brennstoffzellenmembran-Befeuchter (100) nach Anspruch 1,
wobei eine Größe der ersten Dichtung (130a) größer als eine Größe der zweiten Dichtung (130b) ist, wenn die Rippe (25) eine geschlossene Kurvenform aufweist, die die Außenfläche des Innengehäuses (23) umgibt, und der Haken (24) keine geschlossene Kurvenform aufweist.

3. Brennstoffzellenmembran-Befeuchter (100) nach Anspruch 1,
wobei eine Größe der zweiten Dichtung (130b) größer als eine Größe der ersten Dichtung (130a) ist, wenn der Haken (24) eine geschlossene Kurvenform aufweist, die die Außenfläche des Innengehäuses (23) umgibt, und die Rippe (25) keine geschlossene Kurvenform aufweist.

## Revendications

1. Humidificateur à membrane de pile à combustible (100) comprenant :
un boîtier intermédiaire (111) ayant une cloison (114) divisant un espace interne ;
un premier capuchon fixé sur un côté du boîtier intermédiaire (111) ;
un deuxième capuchon fixé sur un autre côté du boîtier intermédiaire (111) ;
un boîtier interne (23) qui est positionné dans le boîtier intermédiaire (111) et loge une pluralité de membranes à fibres creuses (21) ;
une nervure (25) qui fait saillie d'un côté du boîtier interne (23) et est en contact avec une surface de la cloison (114) ;
un crochet (24) qui fait saillie d'un autre côté du boîtier interne (23) et est en contact avec une autre surface de la cloison (114) ;
un premier joint (130a) qui est positionné entre le premier capuchon et le boîtier interne (23) et transmet une force de fixation entre le premier capuchon et le boîtier intermédiaire (111) à la nervure (25) ; et
un deuxième joint (130b) qui est positionné entre le deuxième capuchon et le boîtier interne (23) et transmet la force de fixation entre le deuxième capuchon et le boîtier intermédiaire (111) au crochet (24),
dans lequel une taille du premier joint (130a) est différente d'une taille du deuxième joint (130b).

2. Humidificateur à membrane de pile à combustible (100) selon la revendication 1,
dans lequel, lorsque la nervure (25) a une forme courbe fermée entourant la surface externe du boîtier interne (23) et que le crochet (24) n'a pas de forme courbe fermée,
une taille du premier joint (130a) est supérieure à une taille du deuxième joint (130b).

3. Humidificateur à membrane de pile à combustible (100) selon la revendication 1,
dans lequel, lorsque le crochet (24) a une forme courbe fermée entourant la surface externe du boîtier interne (23) et que la nervure (25) n'a pas de forme courbe fermée,
une taille du deuxième joint (130b) est supérieure à une taille du premier joint (130a).
